(19) **Europäisches Patentamt**

**European Patent Office**

**Office européen des brevets**

(11) **EP 1 250 539 B1**

(12) **FASCICULE DE BREVET EUROPEEN**

(45) Date de publication et mention
de la délivrance du brevet:
**07.01.2004 Bulletin 2004/02**

(21) Numéro de dépôt: **01907662.9**

(22) Date de dépôt: **22.01.2001**

(51) Int Cl.$^7$: **F16F 9/00**

(86) Numéro de dépôt international:
**PCT/FR2001/000200**

(87) Numéro de publication internationale:
**WO 2001/055616 (02.08.2001 Gazette 2001/31)**

(54) **AMORTISSEUR A HAUT POUVOIR DISSIPATIF**

DÄMPFER MIT HOCH ABLEITUNGS LEISTUNG

DAMPER WITH HIGH DISSIPATING POWER

(84) Etats contractants désignés:
**AT BE CH CY DE DK ES FI FR GB GR IE IT LI LU
MC NL PT SE TR**

(30) Priorité: **26.01.2000 FR 0000984**

(43) Date de publication de la demande:
**23.10.2002 Bulletin 2002/43**

(73) Titulaires:
• **SARL D L D INTERNATIONAL
75008 Paris (FR)**
• **Eroshenko, Valentin
92700 Colombes (FR)**

(72) Inventeur: **EROSHENKO, Valentin
F-92700 Colombes (FR)**

(74) Mandataire: **Jaunez, Xavier et al
Cabinet Boettcher,
22, rue du Général Foy
75008 Paris (FR)**

(56) Documents cités:
**WO-A-96/18040        FR-A- 2 478 763
FR-E- 85 116        GB-A- 2 300 892**

EP 1 250 539 B1

## Description

La présente invention concerne un amortisseur à haut pouvoir dissipatif, et plus particulièrement un amortisseur du type comportant un ensemble tige-piston coulissant dans un cylindre en délimitant de part et d'autre du piston une chambre de travail contenant du fluide hydraulique, ledit ensemble tige-piston étant adapté pour être relié à une source de perturbations extérieures et ledit cylindre à une structure à protéger.

Dans les amortisseurs traditionnels, on utilise un système à tige télescopique et ressort de rappel qui est intercalé entre la structure à protéger (par exemple la carrosserie d'un véhicule automobile) et la source de perturbations extérieures (par exemple une roue du véhicule en contact direct avec le sol). Il est alors prévu une unité cylindre - tige piston, entourée par le ressort de rappel, qui a pour fonction de dissiper l'énergie des chocs en tirant parti de l'écoulement visqueux du fluide hydraulique. On sait qu'il existe une relation entre la force de friction F, la vitesse de déplacement $\dot{X}$ du liquide et la viscosité $\eta$ (liquide newtonien) : on a en effet la relation $F = G.\eta(\dot{X})^n$ , où G est un facteur géométrique du système solide-liquide, et n un facteur de puissance en général compris entre 1 et 4. La dissipation de l'énergie dans les amortisseurs traditionnels est réalisée grâce à la transformation de l'énergie mécanique du frottement dans le système solide-liquide, en chaleur qui se dégage vers l'extérieur. La valeur de la dissipation d'énergie est proportionnelle à la vitesse du mouvement à la puissance n, soit $\Delta E = K (\dot{X})^n$. En particulier, lors d'un grand déplacement à très faible vitesse ($X \simeq 0$), il n'y a pratiquement aucune dissipation d'énergie.

Les caractéristiques de l'amortisseur, représentées par les variations de la force en fonction de la vitesse de déplacement, sont plus ou moins pentues selon la structure de l'amortisseur, et l'homme de l'art sait que pour obtenir un confort optimal, avec des amortisseurs de véhicules automobiles traditionnels, il est nécessaire d'abaisser autant que faire se peut la caractéristique de l'amortisseur. On aboutit alors au paradoxe selon lequel, pour avoir une absorption-dissipation d'énergie élevée, il est nécessaire d'avoir une vitesse élevée.

Le document GB-A-2 300 892 décrit un amortisseur dont chaque chambre de travail est reliée à des moyens compliants, en particulier une enveloppe déformable élastiquement ou un ressort à gaz, ou encore un bloc de mousse à cellules fermées disposé dans une chambre de travail. Dans tous les cas, on utilise une déformation élastique, donc un système réversible, sans dissipation d'énergie.

Pour compléter l'arrière-plan technologique, on peut également citer le document FR-E-85 116 qui décrit une suspension à flexibilité variable, et le document FR-A-2 478 763 qui décrit une dissipateur d'énergie de type hydraulique.

La présente invention vise à concevoir un nouveau type d'amortisseur, capable de procurer un pouvoir d'absorption-dissipation d'énergie très élevé, tout en étant plus léger structurellement et moins volumineux que les amortisseurs traditionnels. On cherche également avec ce nouveau type d'amortisseur à avoir un fonctionnement dans une bande de fréquences relativement élevées, sachant qu'un amortisseur traditionnel présente une bande de fréquences allant en général jusqu'à 6 hertz. En effet, si on dépasse des valeurs de fréquences voisines de 6 hertz, le véhicule risque de survoler les irrégularités du sol en perdant de l'adhérence des roues avec la chaussée.

Ce problème est résolu conformément à l'invention grâce à un amortisseur du type comportant un ensemble tige-piston coulissant dans un cylindre en délimitant de part et d'autre du piston une chambre de travail contenant du fluide hydraulique, ledit ensemble tige-piston étant relié à une source de perturbations extérieures et ledit cylindre à une structure à protéger, dans lequel :

- chaque chambre de travail communique en permanence avec une chambre associée contenant une structure hétérogène d'absorption-dissipation d'énergie constituée par au moins une matrice capillairo-poreuse et un liquide associé au regard duquel ladite matrice est lyophobe (non-mouillable);
- chaque chambre de travail communique en outre avec une chambre commune par l'intermédiaire d'un système de valve associé, ledit système incluant un moyen anti-retour assurant automatiquement la fermeture de la chambre de travail concernée lors de la compression, et l'ouverture de ladite chambre lors de la détente, ladite chambre commune constituant une chambre de compensation assurant la continuité du fluide hydraulique lors des déplacements de l'ensemble tige-piston dans le cylindre.

Le concept précité de structure hétérogène d'absorption-dissipation d'énergie utilisant une matrice capillairo-poreuse et un liquide associé au regard duquel ladite matrice est lyophobe est décrit en détail dans le document WO-A-96/18040 de la demanderesse. Conformément à ce type très novateur de structure hétérogène, on utilise une matrice solide capillairo-poreuse à porosité ouverte et de topologie contrôlée, avec des passages capillaires à variations de section et/ou interconnectés entre eux pour former des labyrinthes, et un liquide entourant la matrice capillairo-poreuse en définissant une surface de séparation solide/liquide, liquide au regard duquel la matrice est lyophobe. La surface de séparation est alors évolutive de facon isotherme et réversible en fonction de la pression extérieure à laquelle est soumise la structure hétérogène. On définit ainsi de véritables couples [matrice solide capillairo-poreuse] - [liquide adapté] qui permettent d'obtenir des performances tout-à-fait étonnantes d'accumulation ou d'absorption d'énergie (processus isothermes quasi-réversibles) et de dissipation d'énergie (processus isothermes irréversibles) en utilisant la seule évolution de la surface de séparation, et ceci, de façon tout à fait surprenante.

On pourra prévoir que le fluide hydraulique occupant les chambres de travail est identique au liquide des structures hétérogènes d'absorption-dissipation d'énergie, ou en variante que chaque structure hétérogene d'absorption-dissipation d'énergie est confinée dans un logement étanche déformable, le fluide hydraulique occupant les chambres de travail étant alors un fluide technologique traditionnel.

Conformément à un mode d'exécution particulier, l'ensemble tige-piston comporte une tige qui est creuse de part et d'autre du piston, chaque partie creuse délimitant intérieurement une chambre contenant une structure hétérogène d'absorption-dissipation d'énergie renfermée dans une enveloppe étanche souple.

En variante de ce mode d'exécution, l'ensemble tige-piston comporte une tige qui est pleine de part et d'autre du piston, et ledit amortisseur comporte des chambres contenant une structure hétérogène d'absorption-dissipation d'énergie renfermée dans une enveloppe étanche souple, qui sont alors agencées autour du cylindre, à l'intérieur d'un boîtier commun.

La tige-piston de l'amortisseur selon l'invention pourra être constituée de deux parties de même diamètre extérieur, ou en variante de deux parties de diametres extérieurs différents, auquel cas la partie de plus grand diamètre est du côté de la structure à protéger (par exemple la carrosserie d'un véhicule) et la partie de plus petit diamètre est du côté de la source de perturbations extérieures (par exemple la roue du véhicule).

Chaque enveloppe étanche souple peut être accrochée, selon le cas, au fond de la chambre intérieure associée de la tige-piston ou à la paroi interne du boîtier commun, ou en variante être en suspension libre dans un boîtier latéral associé rigidement solidaire du boîtier contral et en communication avec celui-ci par une fenêtre associée ou encore dans ladite chambre intérieure associée.

Les matrices capillairo-poreuses peuvent être identiques topologiquement et géométriquement de part et d'autre du piston, ou en variante être différentes topologiquement et géométriquement pour introduire un facteur d'asymétrie contrôlée, et dans chaque cas, chaque matrice peut être uni - ou pluriporeuse en fonction de la dureté désirée de l'amortisseur.

De même, les liquides non mouillants peuvent avoir des caractéristiques de tension superficielle qui sont identiques de part et d'autre du piston, ou en variante différentes pour introduire un facteur d'asymétrie contrôlée.

La chambre commune de compensation peut être à paroi souple de façon à présenter un volume variable. En particulier, on pourra prévoir alors que la paroi souple entoure une partie centrale du cylindre, de façon à délimiter une chambre annulaire constituant la chambre de compensation, ou que la a chambre commune de compensation à paroi souple est agencée à l'intérieur du piston qui est prévu creux, ou encore que la chambre commune de compensation à paroi souple est une chambre annulaire agencée en bout du boîtier commun. En variante, on pourra prévoir que la chambre commune de compensation est à paroi rigide, et présente un fond mobile ou déformable associé à un organe élastique (par exemple un volume de gaz, une membrane, ou un piston sollicité par ressort).

De préférence, le système de valve associé à chaque chambre de travail inclut un étrangleur déterminant un orifice calibré pour le passage du fluide hydraulique venant de la chambre commune de compensation. En particulier, chaque étrangleur est réglable individuellement, et peut être calé à une position telle que la valeur maximale de la résistance hydraulique dudit étrangleur corresponde à la valeur de la pression capillaire d'intrusion du liquide dans les pores de la matrice associée.

Conformément à un mode d'exécution particulier, le moyen anti-retour du système de valve associé à chaque chambre de travail comporte un collier plat déformable, dont les deux branches peuvent obturer des orifices radiaux du cylindre qui communiquent par des canaux respectifs avec la chambre commune de compensation.

Conformément à un autre mode d'exécution particulier, le moyen anti-retour du système de valve associé à chaque chambre de travail comporte des clapets mobiles éventuellement chargés par un ressort associé. En particulier, les clapets mobiles peuvent être agencés aux extrémités d'un tube central débouchant dans le piston creux par des orifices associés, la chambre de compensation contenant un soufflet toroïdal d'air entourant ledit tube.

Avantageusement alors, les clapets mobiles présentent un passage central formant orifice calibré.

D'autres caractéristiques et avantages de l'invention apparaîtront plus clairement à la lumière de la description qui va suivre et des dessins annexes, concernant un mode de réalisation particulier, en référence aux figures où :

- la figure 1 est une vue schématique illustrant un amortisseur conforme à l'invention, avec plusieurs possibilités pour sa chambre de compensation (A), B), C) et ses chambres à structure hétérogène d'absorption-dissipation d'énergie a), b), c) ;

- la figure 2 est une coupe axiale d'une structure particulière d'amortisseur selon l'invention,

- la figure 3 est une coupe partielle à plus grande échelle de l'amortisseur précité,

- la figure 4 est une coupe associée selon la ligne IV-IV de la figure 3,

- la figure 5 est une coupe de détail à plus grande échelle permettant de mieux distinguer la structure du système de valve associé à chaque chambre de travail de l'amortisseur,

- la figure 6 est une vue en coupe partielle de l'amortisseur précité, avec un arrachement de la tige - piston et de l'enveloppe étanche souple contenant une structure hétérogène d'absorption-dissipation d'énergie, afin de mieux distinguer l'agencement du moyen anti-retour faisant partie du système de valve associé,
- la figure 7 est une vue illustrant en perspective la structure du moyen anti-retour précité,
- la figure 8 est un diagramme représentant plusieurs caractéristiques d'un amortisseur selon l'invention, utilisant des matrices pluriporeuses, les différentes courbes résultant de différents degrés d'ouverture du système d'étranglement comme illustré sur la figure 8a et de différentes structures de matrices comme illustré en figure 8b avec les courbes de répartition des pores des matrices,
- la figure 9 est un diagramme illustrant différentes caractéristiques d'un amortisseur selon l'invention, utilisant des matrices uniporeuses, comme illustré sur le diagramme de la figure 9a associée,
- les figures 10 et 11 illustrent les caractéristiques de l'amortisseur selon l'invention pour les parties choc-rebond,
- la figure 12 est un diagramme illustrant à la fois la caractéristique statique de l'amortisseur selon l'invention et celle d'un amortisseur traditionnel, ledit diagramme mettant en évidence le haut pouvoir d'absorption d'énergie de l'amortisseur selon l'invention par rapport aux systèmes traditionnels,
- la figure 13 est un diagramme illustrant une autre particularité de l'amortisseur selon l'invention, selon laquelle la force F ne varie pas avec la vitesse de déplacement en-dessous d'une vitesse critique,
- la figure 14 illustre encore la caractéristique de l'amortisseur selon l'invention, construite points par points à différentes vitesses (de 5 à 200 mm/s),
- la figure 15 est un autre diagramme caractéristique obtenu en faisant varier les fréquences de 1 à 12 Hz, ledit diagramme montrant que la force F est indépendante de la fréquence en-dessous de la vitesse critique,
- la figure 16 est un diagramme illustrant les caractéristiques d'un couple liquide - matrice lyophobe à différentes vitesses de la tige de l'amortisseur, y compris la vitesse nulle (0 à 5 m/s) , ledit diagramme montrant que la pression P (ou la force F) est indépendante de la vitesse (les vitesses considérées sont inférieures à la vitesse critique), et
- les figures 17 et 18 illustrent en coupe deux autres variantes de réalisation d'un amortisseur selon l'invention, avec un ensemble tige-piston dont la tige et le piston sont creux.

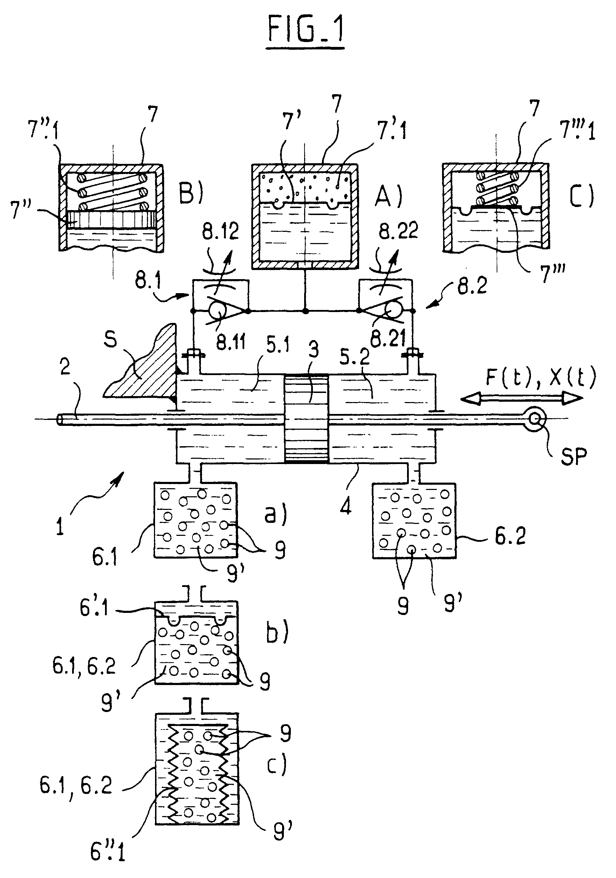

On va tout d'abord décrire la structure générale d'un amortisseur conforme à l'invention en référence à la figure 1.

On distingue un amortisseur noté 1, qui est du type comportant un ensemble à tige 2 et piston 3 coulissant dans un cylindre 4, en délimitant de part et d'autre du piston 3 une chambre de travail 5.1, 5.2 contenant du fluide hydraulique. L'ensemble tige-piston 2, 3 est relié à une source de perturbations extérieures SP (par exemple une roue d'un véhicule automobile au contact du sol), tandis que le cylindre 4 est relié à une structure à protéger S (par exemple la carrosserie du véhicule). L'extrémité de tige reliée à la source extérieure SP se déplace axialement selon un déplacement X(t)et transmet une force F(t), le paramètre t étant le temps.

Conformément à une première caractéristique essentielle de l'invention, chaque chambre de travail 5.1, 5.2 communique en permanence avec une chambre associée 6.1, 6.2 contenant une structure hétérogène d'absorption-dissipation d'énergie constituée par au moins une matrice capillairo-poreuse 9 et un liquide associé 9' au regard duquel ladite matrice est lyophobe (c'est-à-dire que le liquide 9' ne mouille pas la matrice poreuse 9). Un tel couple [matrice capillairo-poreuse] -[liquide non mouillant associé] est décrit en détail, avec le principe de fonctionnement de cette structure hétérogène, dans le document précité WO-A-96/18040.

A titre d'exemple non limitatif, on peut citer pour les matrices poreuses les matériaux suivants : silicagels, alumino-silicates, zéolithes de tous types, verres poreux..., et pour les liquides non-mouillants associés : l'eau, les solutions aqueuses, les eutectiques à basse température, les liquides polaires, ....

Sur l'exemple a), le fluide hydraulique occupant les chambres de travail 5.1, 5.2 est identique au liquide 9' des structures hétérogènes d'absorption-dissipation d'énergie se trouvant dans les chambres 6.1, 6.2 : il n'y a dans ce cas qu'un seul type de fluide.

En général, on préférera prévoir que chaque structure hétérogène 9, 9' soit confinée dans un logement étanche déformable, comme illustré sur les exemples b) et c), le fluide hydraulique occupant les chambres de travail 5.1, 5.2 étant alors un fluide technologique traditionnel, tel que de l'huile. En b), le logement étanche est délimité par une membrane 6'.1, et en c) par une enveloppe en soufflet 6".1.

Conformément à une deuxième caractéristique essentielle de l'invention, chaque chambre de travail 5.1, 5.2 communique en outre avec une chambre commune 7 par l'intermédiaire d'un système de valve associé 8.1, 8.2. Chaque système de valve inclut un moyen anti-retour 8.11, 8.21 qui assure automatiquement la fermeture de la chambre de travail concernée 5.1, 5.2 lors de la compression, et l'ouverture de ladite chambre lors de la détente.

Cette chambre commune 7 constitue une chambre de compensation qui assure la continuité du fluide hydraulique contenu dans les chambres de travail 5.1, 5.2 lors des déplacements de l'ensemble tige-piston 2, 3 dans le cylindre 4.

Chaque système de valve 8.1, 8.2 inclut de préférence aussi un étrangleur réglable 8.12, 8.22 définissant un orifice de passage calibré.

En l'espèce, la chambre commune de compensation 7 est à paroi rigide, et elle est agencée à l'extérieur du cylindre 4, mais ceci n'est pas une obligation comme on le verra par la suite.

Cette chambre commune de compensation 7 présente un fond mobile ou déformable associé à un organe élastique. On a représenté ici trois variantes envisageables : en A) le fond mobile est une membrane flexible 7' et l'organe élastique est un volume d'air comprimé 7'.1, en B) le fond mobile est un piston 7" et l'organe élastique est un ressort 7".1, et en C) le fond mobile est une membrane flexible 7"' à disque central rigide et l'organe élastique un ressort 7"'.1.

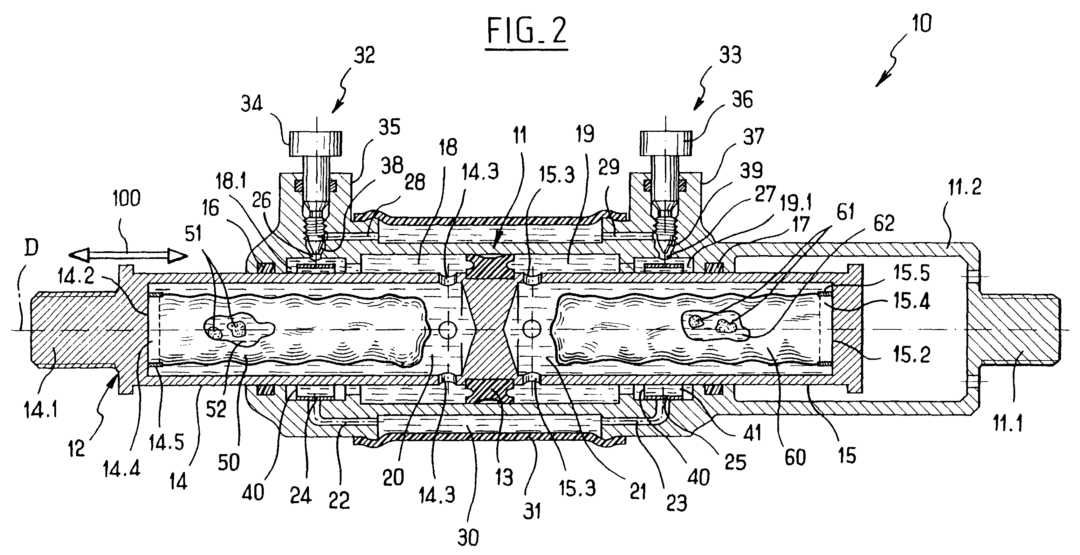

Le fonctionnement et les avantages d'un tel amortisseur seront décrits plus loin, en référence à la figure 2 qui illustre de façon plus structurelle un exemple de réalisation complet de l'amortisseur selon l'invention.

On va donc maintenant décrire plus en détail la structure d'un amortisseur selon l'invention en référence aux figures 2 à 7, conformément à un premier mode de réalisation.

On distingue sur la figure 2 un amortisseur noté 10, qui est du type comportant une tige-piston 12 coulissant dans un cylindre 11 en délimitant de part et d'autre du piston 13 une chambre de travail 18, 19 qui communique en permanence avec une chambre intérieure associée 20, 21 de la tige-piston 12.

En l'espèce, la tige-piston 12 est constituée de deux parties creuses 14, 15 de même diamètre extérieur, s'étendant de part et d'autre du piston 13, l'étanchéité se faisant par des joints toriques associés 16, 17. La tige-piston 12 coulisse alors selon une direction axiale 100 dans le cylindre 11 associé d'axe D, l'extrémité 14.1 de la tige-piston étant reliée à une source de perturbations extérieures (non représentée ici). Dans le cas d'un montage sur véhicule automobile, cette partie 14.1 sera de préférence disposée du côté de la roue du véhicule, la partie opposée 11.1 du cylindre 11, agencée en extrémité d'un prolongement formant capot protecteur 11.2, étant quant à elle associée à la structure à protéger, par exemple la carrosserie dudit véhicule.

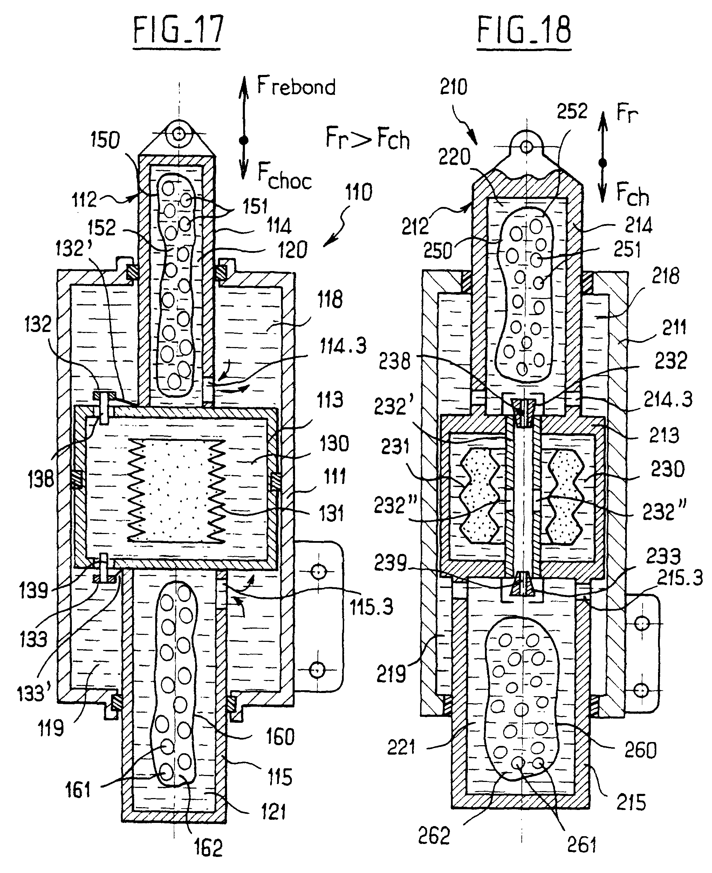

Comme on le verra par la suite sur les variantes illustrées aux figures 17 à 23, on pourra prévoir que la tige-piston 12 est constituée de deux parties de diamètres extérieurs différents, auquel cas il sera avantageux de prévoir que la partie de plus grand diamètre est disposée du côté de la structure à protéger et la partie de plus petit diamètre du côté de la source de perturbations extérieures, de façon à absorber les chocs avec une force minimale (amélioration du confort des passagers du véhicule), et à exercer un rebond avec une force plus importante (amélioration de l'adhérence des roues avec la chaussée).

On constate que chaque chambre intérieure 20, 21 de la tige-piston 12 communique par des orifices associés 14.3, 15.3 avec la chambre de travail associée 18, 19, laquelle correspond ici à l'espace annulaire délimité entre le corps du cylindre 11 et la surface extérieure de la tige-piston 12.

Conformément à la première caractéristique essentielle précitée de l'invention, chaque chambre intérieure 20, 21 de la tige-piston 12 enferme une enveloppe étanche souple 50, 60 contenant une structure hétérogène d'absorption - dissipation d'énergie constituée par une matrice capillairo-poreuse 51, 61 et un liquide associé 52, 62 au regard duquel ladite matrice est lyophobe. Comme indiqué plus haut, un tel couple [matrice capillairo-poreuse] - [liquide non mouillant associé] est décrit en détail avec le principe de fonctionnement de la structure hétérogène dans le document précité WO-A-96/18040. Il convient de noter que le liquide 52, 62 qui est enfermé de façon étanche dans les enveloppes associées 50, 60 n'a ici rien à voir avec le fluide hydraulique qui occupe les chambres intérieures 20, 21 de la tige-piston 12 et les chambres de travail 18, 19 associées, lequel fluide hydraulique un simple fluide technologique tel que de l'huile.

En l'espèce, chaque enveloppe étanche souple 50, 60, est accrochée au fond 14.2, 15.2 de la chambre intérieure associée 20, 21 de la tige-piston 12. On a représenté schématiquement un collet 14.4, 15.4 saillant du fond 14.2, 15.2 des extrémités de la tige-piston 12, collet sur lequel est accroché l'extrémité ouverte de l'enveloppe souple associée, la fixation étant réalisée par un collier de serrage 14.5, 15.5.

Bien que cela ne soit pas représenté ici, on pourra prévoir en variante que chaque enveloppe étanche souple 50, 60 est en suspension libre dans la chambre intérieure associée 20, 21 de la tige piston 12.

Les matrices capillairo-poreuses 51, 61, contenues dans leur enveloppe étanche souple 50, 60, seront en général topologiquement et géométriquement identiques de part et d'autre du piston 13. Il est possible cependant de prévoir en variante que les matrices capillaire-poreuses 51, 61 soient topologiquement et géométriquement différentes de part et d'autre du piston 13, de facon à introduire volontairement un facteur d'asymétrie prédéterminé. Dans ce cas par exemple, si l'on opte pour des géométries différentes (rayons différents des pores et capillaires), on disposera la matrice qui présente les pores et capillaires de plus faibles rayons dans la chambre qui est associée au rebond (pour avoir une force élevée de ce côté du piston), et la matrice qui présente les pores et capillaires de plus grands rayons dans la chambre qui est associée au choc. On pourra naturellement aussi modifier la topologie de l'espace poreux des deux matrices.

Pour obtenir un tel facteur d'asymétrie prédéterminée, on pourra en variante utiliser des matrices capillairo-poreuses essentiellement identiques (topologiquement et géométriquement) de part et d'autre du piston 13, mais ces matrices baignant dans des liquides présentant des caractéristiques différentes de tension superficielle de part et d'autre dudit piston. Dans ce cas, on disposera le liquide de plus grande tension superficielle dans la chambre qui est associée au rebond (pour avoir une force élevée de ce côté du piston), et le liquide de plus faible tension superficielle dans la chambre qui est associée au choc.

Dans les deux cas, chaque matrice capillairo-poreuse 51, 61 pourra être uniporeuse ou pluriporeuse selon que le facteur de répartition des pores (rayon r) dans le volume (V) de la matrice est nul ou non nul respectivement. Ce facteur peut être noté $\frac{\partial r}{\partial v}$, et on a $\frac{\partial r}{\partial v} = O$ pour une matrice uniporeuse, et $\frac{\partial r}{\partial v} \neq O$ pour une matrice pluriporeuse . Ces particularités structurelles des matrices capillairo-poreuses sont décrites en détail dans le document précité WO-A-96/18040.

On sait qu'avec de telles structures hétérogènes, le liquide entourant les matrices capillairo-poreuses ne pénètre dans les pores desdites matrices que lorsque la pression du liquide environnant dépasse la pression dite de Laplace, laquelle pression capillaire est donnée par la formule P = (2σ.|cos θ| · /r, où σ est la tension superficielle du liquide utilisé, θ est l'angle de contact solide-liquide (en l'espèce nettement plus grand que 90°), et r est le rayon des pores capillaires de la matrice poreuse (r est en l'espèce compris entre le rayon des molécules du liquide non mouillant utilisé, et une valeur de l'ordre du dixième de micromètre). C'est cette formule fondamentale qui gouverne la pression régnant dans le système hétérogène, c'est-à-dire à l'intérieur de chaque enveloppe souple étanche 50, 60.

L'utilisation combinée des phénomènes de capillarité et de la loi de Pascal pour les systèmes hydrauliques (pression identique en tous points d'un espace clos) établit l'identité de la pression à l'intérieur des enveloppes 50, 60, et dans les chambres 18, 20 et 19, 21 respectivement. En outre, pour que l'amortisseur fonctionne, le volume de liquide dans les enveloppes 50, 60 doit être au moins égal à la somme des volumes des pores de la matrice concernée et des volumes entre particules poreuses de ladite matrice.

Conformément à la deuxième caractéristique essentielle précitée de l'invention, chaque chambre de travail 18, 19 communique en outre avec une chambre commune par l'intermédiaire d'un système de valve associé, ledit système incluant un moyen anti-retour assurant la fermeture de la chambre de travail concernée lors de la compression, et l'ouverture de ladite chambre lors de la détente. Cette chambre commune constitue une chambre de compensation assurant la continuité du fluide hydraulique lors des déplacements de la tige-piston 12 dans le cylindre 11.

En l'espèce, la chambre commune de compensation, notée 30, est à paroi souple (paroi 31) de façon à présenter un volume variable. La paroi souple 31 entoure ici une partie centrale du cylindre 11, de façon à délimiter une chambre annulaire constituant la chambre de compensation 30. La liaison entre la chambre de compensation 30 et les chambres de travail 18, 19, se fait d'une part par un canal 28, 29 menant au système de valve associé 32, 33, et d'autre part par une pluralité de canaux 22, 23 (ici au nombre de six) qui relient un compartiment terminal 18.1 ou 19.1 de la chambre de travail 18, 19.

Comme cela a été dit plus haut, on pourra prévoir en variante une chambre commune de compensation à paroi rigide, qui serait alors extérieure à l'amortisseur, et reliée aux chambres de travail 18, 19 par une conduite associée, la chambre commune de compensation présentant alors un fond mobile ou déformable associé à un organe élastique. Dans ce cas, la chambre commune de compensation à paroi rigide communique avec chaque chambre de travail 18, 19 par l'intermédiaire d'un système de valve identique à celui décrit présentement.

Dans la pratique, on préférera une chambre de compensation à paroi souple si l'on reste dans la gamme des petites fréquences (on a le refoulement par la différence entre la pression atmosphérique et la dépression dans les chambres de travail lors de la détente), et à paroi rigide si l'on reste dans la gamme des fréquences élevées.

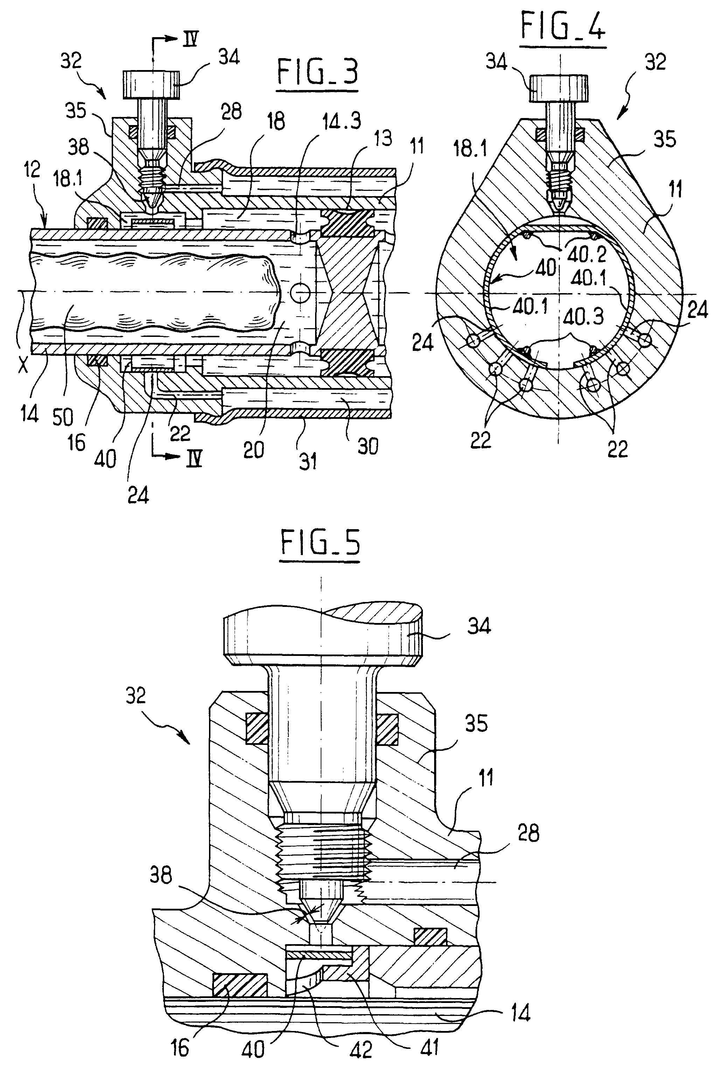

Comme représenté aux figures 2 et 3, le système de valve 32, 33 associé à chaque chambre intérieure 20, 21 de la tige-piston 12 inclut un étrangleur 34, 36 déterminant un orifice calibré 26, 27 pour le passage du fluide hydraulique venant de la chambre commune de compensation 30 en passant par les canaux de liaison 28, 29. En l'espèce, chaque étrangleur 34, 36 est monté sur une excroissance associée 35, 37 du corps de cylindre 11. L'extrémité distale de chaque étrangleur 34, 36 présente un embout conique 38, 39 définissant un orifice calibré 26, 27 d'une largeur prédéterminée. De préférence, comme cela est illustré ici, chaque étrangleur 34, 36 est réglable individuellement par l'extérieur, ce qui est ici obtenu par le vissage ou de dévissage d'une partie filetée de l'étrangleur dans un taraudage associé de l'excroissance 35, 37. Ceci permet d'obtenir aisément tout réglage particulier de l'amortisseur en fonction des conditions rencontrées, ainsi que cela sera décrit plus loin plus en détail. En particulier, on pourra s'arranger pour que la position de chaque étrangleur 34, 36 soit calée à une valeur telle que la valeur maximale de la résistance hydraulique dudit étrangleur corresponde à la valeur de la pression capillaire d'intrusion du liquide 52, 62 dans les pores de la matrice associée 51, 61 (pression capillaire de Laplace).

Le système de valve 32, 33 associé à chaque chambre intérieure 20, 21, comporte en outre un moyen anti-retour qui est ici réalisé sous la forme d'un collier plat déformable 40, 41 disposé dans le compartiment terminal associé 18.1, 19.1. Ainsi que cela est mieux visible sur les figures 4 à 7, chaque collier plat déformable 40, 41 présente deux branches pouvant obturer des orifices radiaux 24, 25 du cylindre 11, qui communiquent par les six canaux respectifs 22, 23 avec la chambre commune de compensation 30.

Les figures 4 à 7 permettent de mieux distinguer le collier plat 40 associé à la chambre de travail 18, mais il est entendu que l'autre collier 41 qui est associé à la chambre de travail 19 présente une structure identique.

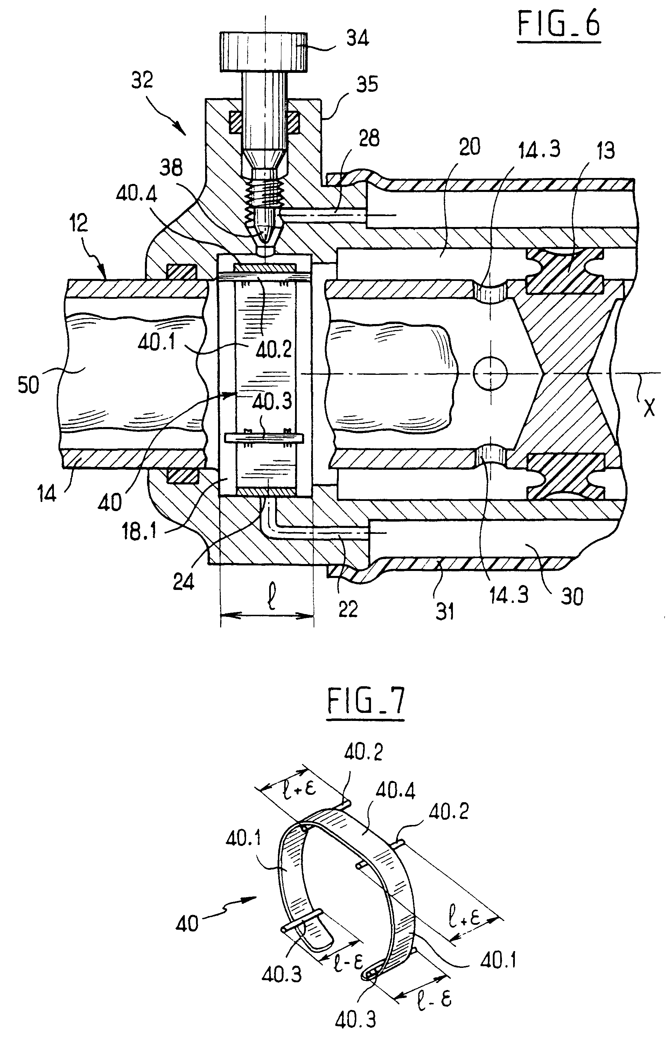

Le collier 40 (figures 4 à 7), réalisé par exemple en bronze-béryllium, présente ainsi deux branches plates 40.1 partant d'une portion supérieure immobile 40.4 (figure 7). Des doigts soudés 40.2 et 40.3 sont prévus pour maintenir en position le collier déformable 40 dans son logement associé 18.1. Sur les figures 6 et 7, on a noté $\ell$ la largeur du compartiment 18.1. Les doigts 40.2 associés à la partie immobile 40.4 du collier 40 sont légèrement plus longs que la cote $\ell$, ce qui est noté ici $\ell + \varepsilon$, de facon à obtenir un coincement de maintien du collier 40. Par contre, les autres doigts 40.3 ont une longueur légèrement inférieure, notée $\ell - \varepsilon$, de façon à autoriser le libre débattement transversal des branches 40.1 du collier 40 dans les compartiments 18.1 et 19.1. Il est aisé de comprendre que les branches 40.1 sont appliquées naturellement par l'élasticité propre du collier 40 contre les orifices 24 des canaux 22, et ferment lesdits canaux. Par contre, si du fluide hydraulique venant de la chambre de compensation 30 arrive par les canaux 22, ce fluide peut exercer une poussée suffisante pour rapprocher élastiquement les branches 40.1 du collier 40, en laissant alors passer le fluide par les orifices 24.

On notera sur le détail de la figure 5 la présence d'une rondelle 41 à orifices 42, qui assure à la fois le maintien du collier 40 en position, et le passage du fluide arrivant par l'orifice calibré 38. Il s'agit là d'une variante de réalisation qui présente l'avantage de simplifier la fabrication du collier plat, en évitant d'avoir à rapporter des doigts de maintien par soudure.

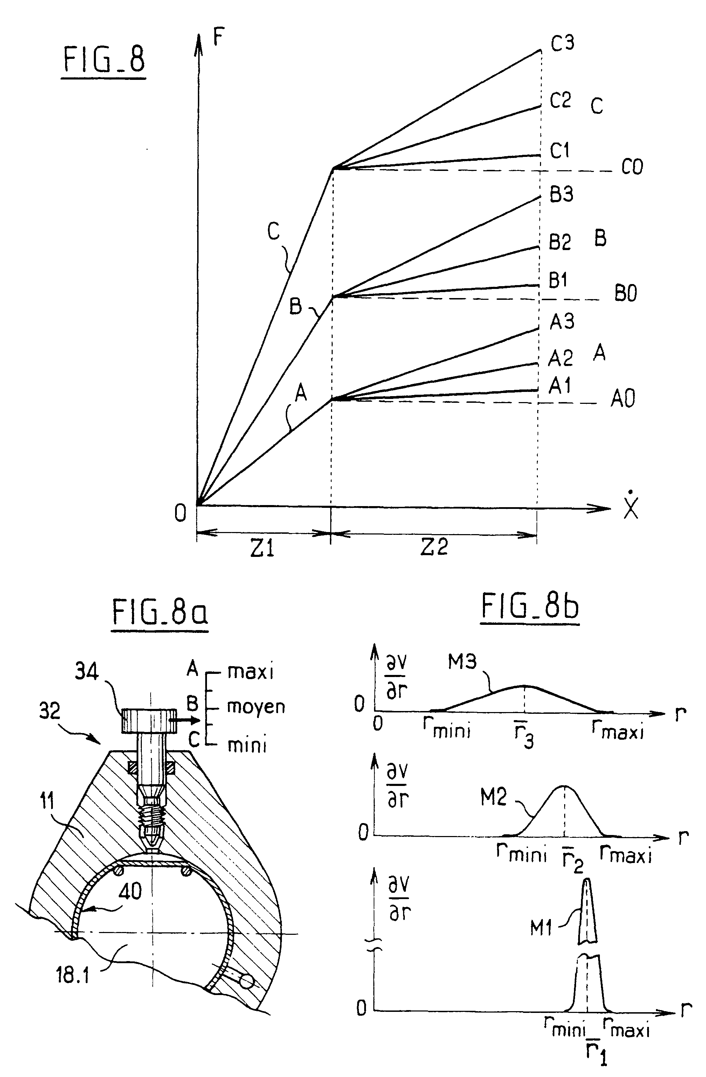

On va maintenant décrire plus en détail, en se référant aux figures 8 à 16, le fonctionnement et les caractéristiques de l'amortisseur selon l'invention qui est réalisé structurellement comme décrit ci-dessus en référence à la figure 2.

Il convient tout d'abord d'examiner la situation de l'amortisseur au repos, en l'absence de sollicitations extérieures. La tige-piston 12 (figure 2) est alors en équilibre indifférent, ladite tige-piston se trouvant par exemple au milieu du cylindre 11 par suite de l'action du ressort de rappel extérieur non représenté (la position d'arrêt est en fait quelconque). Les pressions dans les deux chambres de travail 18, 19, ainsi que dans la chambre de compensation 30 sont alors égales. Les espaces poreux des matrices des structures hétérogènes enfermées dans leur enveloppe sont alors vides, ceci résultant du fait que le liquide associé ne peut pas spontanément pénétrer dans les pores capillaires des matrices, du fait de la non-mouillabilité par ce liquide (angle $\theta$ nettement supérieur à 90°). Ainsi, même en l'absence de ressort de rappel, il faut appliquer à la tête de la tige-piston une certaine force pour déplacer le piston. Ceci signifie qu'en equilibre la position du piston est auto-assurée, de sorte que l'on obtient une autostabilisation très intéressante dans la pratique car elle évite une rigidité du système.

Si maintenant un choc est exercé sur l'extrémité libre de la tige-piston 12, tendant à déplacer la tige-piston vers la droite sur la figure 2, l'étrangleur 36 qui se comporte comme un bouchon empêche le fluide hydraulique de la chambre de travail 19 d'aller vers la chambre de compensation 30, et le clapet anti-retour 41 est quant à lui fermé, de sorte que les chambres 19 et 21 forment un récipient clos. Le fluide quasi-condensé comprime l'enveloppe souple 60, et la pression à l'intérieur de ladite enveloppe croît depuis la valeur de la pression atmosphérique, ce qui a pour effet, lorsque la pression dépasse la valeur de la pression capillaire de Laplace, de faire diminuer le volume intérieur de l'enveloppe 60 lors de la pénétration du liquide de travail 62 dans les pores des matrices poreuses associées 61. Parallèlement à l'augmentation de pression (compression) dans les chambres 19 et 21, on assiste à une diminution de pression (détente) dans les autres chambres 18 et 20. La présence du clapet anti-retour 40 et de la chambre de compensation 30 permet dans ce cas d'éviter l'apparition du vide dans les chambres 18 et 20, en assurant ainsi la continuité de la phase condensée.

Grâce aux deux étrangleurs 34, 36 qui sont réglables, on peut imposer une résistance hydraulique déterminée à surmonter lors du refoulement du liquide entre les chambres 18, 20 et 19, 21 à travers la chambre de compensation 30. La pression à surmonter dans ce cas est la pression capillaire d'intrusion du liquide lyophobe dans les matrices associées (pression capillaire de Laplace).

Si l'on revient à un déplacement vers la gauche du piston dans l'état dynamique, on remarque que le volume du système hétérogène dans la chambre de compression 18 diminue sous l'action de la pression de compression forcée (par une action extérieure). Simultanément à ce phénomène dans les chambres 18 et 20, le fluide hydraulique est refoulé de la chambre de compensation 30 à la chambre 19, 21 à travers le clapet anti-retour 41 en assurant la continuité de la phase condensée dans l'espace des chambres 19, 21. Si à un certain moment la tige-piston s'arrête et qu'ensuite, par sollicitations, elle commence à se déplacer dans l'autre sens, une compression forcée se produit alors instantanément dans la chambre 19, 21, grâce à la résistance hydraulique à l'étrangleur 36, il se produit une intrusion du liquide dans les pores capillaires du systeme hétérogène renfermé dans l'enveloppe 60, tandis que la détente simultanée va se produire dans les chambres 18 et 20 avec l'expulsion spontanée du liquide des pores capillaires du système hétérogène enfermé dans l'enveloppe 50. Lors de cette expansion du système hétérogène, le volume de l'enveloppe 50 augmente en occupant l'espace de la chambre 20. S'il y a à ce moment un déficit de volume de fluide condensé dans la chambre 18, 20, le fluide de la chambre de compensation 30 va pénétrer par le clapet anti-retour 40 dans l'espace des chambres de travail 18 et 20 sous l'action de la différence de pression (pression atmosphérique agissant sur la paroi souple 31, ajoutée a la dépression possible dans la chambre intérieure 20) lors du mouvement de la tige-piston vers la droite.

Autrement dit, indépendamment de la position et de la direction du déplacement du piston 13 (figure 2), le système hétérogène est à chaque instant prêt à absorber l'énergie du choc extérieur, ou celle du rebondissement, dans la chambre de travail concernée pour la dissiper dans la chambre de travail opposée. La chambre de compensation 30 est fondamentale, car elle permet d'assurer la continuité du fluide hydraulique dans le système, en évitant toute rupture pouvant provenir soit de la vitesse de compression/détente, soit d'une asymétrie géométrique résultant par exemple d'une différence de diamètres des deux parties de la tige creuse 12.

Si on examine maintenant le diagramme illustré sur la figure 8, qui correspond au cas de matrices pluriporeuses, on constate que les variations de la force F en fonction de la vitesse de déplacement $\dot{X}$ comportent une première zone Z1 de vitesses que l'on pourrait qualifier de newtonnienne, puis une deuxième zone Z2 qui correspond plus particulièrement au fonctionnement du système hétérogène lyophobe concerné. Les différentes parties linéaires notées A, B, C pour la zone Z1 correspondent en réalité à des degrés d'ouverture différents de l'étrangleur 34, comme schématisé sur la figure 8a, avec une valeur maximale en A, une valeur moyenne en B et une valeur minimale en C. Pour la zone Z2, on aura chaque fois différentes pentes de caractéristiques en fonction de la géométrie/morphologie de la matrice pluriporeuse. Si l'on se réfère à la figure 8b qui illustre trois courbes de répartition des pores (rayon r) des matrices dans le volume (V), on peut dire que les tronçons A1, B1, C1 correspondent à une courbe de répartition du type M1 très pointue, tandis que les courbes A2, B2, C2 correspondent à une répartition moyenne du type M2, et que les courbes A3, B3, C3 correspondent à une répartition moyenne plus aplatie M3. Les tronçons A3, B3, C3 correspondent à un réglage dur de l'amortisseur, tandis que les tronçons A2, B2, C2 correspondent à un réglage moyen, et que les tronçons A1, B1, C1 correspondent à un réglage de confort. Les tronçons horizontaux A0, B0, C0 correspondent quant à eux à un réglage idéal, dans la pratique jamais atteint.

Dans ce cas, on utilise à la fois le réglage de l'étrangleur et le choix opportun de la géométrie/morphologie des matrices poreuses de la structure hétérogène pour ajuster les caractéristiques de l'amortisseur en fonction des conditions rencontrées. Le liquide au regard duquel les matrices poreuses sont lyophobes, reste quant à lui essentiellement invariable (figure 8).

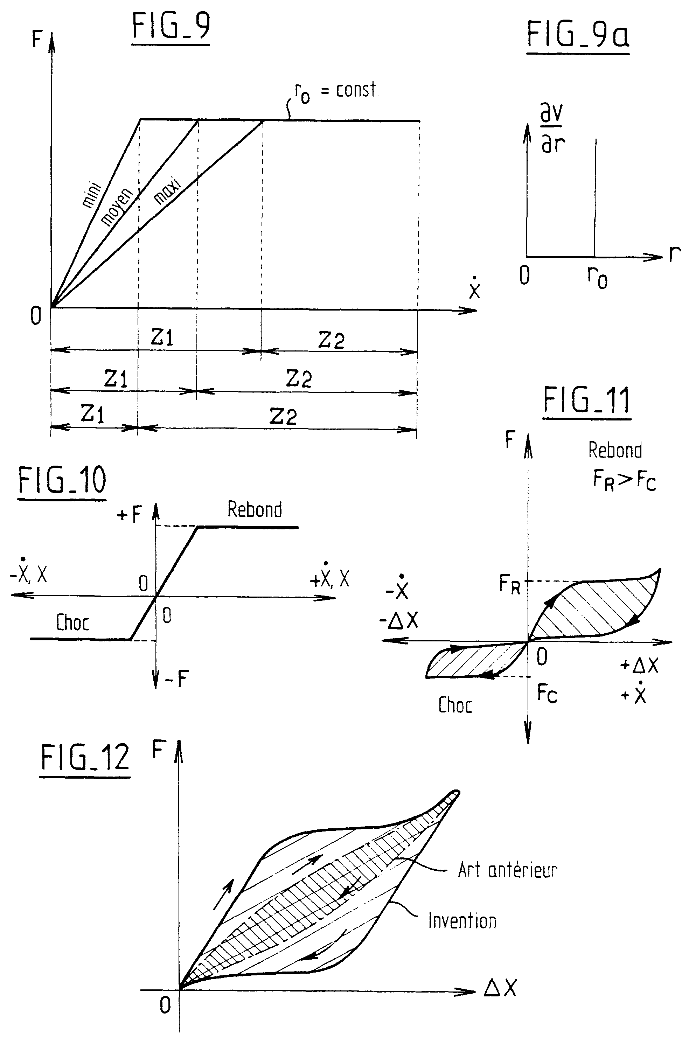

Sur le diagramme de la figure 9, on a illustré le cas d'une matrice uniporeuse ($r_0$ = constante). Les réglages de l'étrangleur donnent alors une première partie de caractéristique inclinée qui diffère selon le choix du degré d'ouverture (maxi, moyen, mini), avec une étendue en rapport pour la zone dite newtonnienne Z1. Ensuite, la force F est pratiquement constante, c'est-à-dire qu'elle ne dépend pas significativement de la vitesse $\dot{X}$. Ceci illustre une particularité tout à fait remarquable de l'amortisseur selon l'invention, se démarquant radicalement des amortisseurs traditionnels qui présentent une caractéristique avec une force proportionnelle à une puissance au moins égale à 1 de la vitesse de déplacement. La figure 9a est un simple diagramme de la répartition des pores dans le volume V rappelant qu'il s'agit d'une matrice uniporeuse, avec un rayon r de pore calé sur la valeur r (par exemple tamis moléculaire, zéolithes, ...).

Les diagrammes des figures 10 et 11 illustrent les caractéristiques avec le rebond et le choc que l'on obtient ici avec un amortisseur selon l'invention, avec une force constante à partir du moment où l'on travaille sur les structures hétérogènes, respectivement avec des matrices uniporeuses et pluriporeuses.

Le diagramme de la figure 12 illustre à la fois le comportement (force F en fonction du déplacement $\Delta X$) d'un amortisseur selon l'invention (en trait continu), et le comportement d'un amortisseur traditionnel (en trait mixte). Pour les amortisseurs traditionnels, avec leur caractéristique F proportionnelle à $\dot{X}$, on peut présenter le déplacement $\Delta X$ sur la figure 12 comme étant $\Delta X = \dot{X}.\Delta t$ ($\Delta t$ étant une durée élémentaire). On constate que la zone hachurée associée aux amortisseurs traditionnels correspond à une dissipation beaucoup plus faible que celle obtenue avec un amortisseur selon l'invention. Si l'on calcule le rapport entre l'énergie dissipée et le volume de la chambre de travail, ce qui correspond à une capacité dissipative, on constate que l'amortisseur selon l'invention permet d'obtenir une valeur de capacité dissipative 100 à 1000 fois supérieure. On obtient ainsi des performances tout à fait remarquables d'énergie dissipée avec un volume de liquide de travail extrêmement faible.

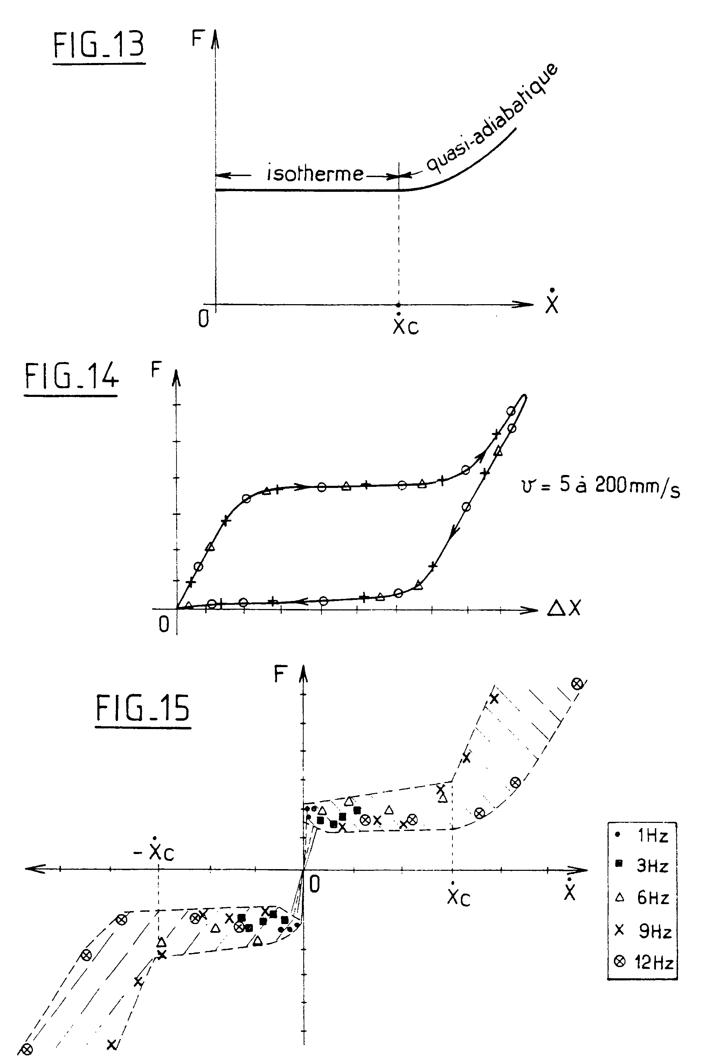

Le diagramme de la figure 13 (force F en fonction de la vitesse de déplacement $\dot{X}$) montre que la force F ne varie pas avec la vitesse de déplacement, et ce tant qu'on reste en dessous d'une vitesse critique $\dot{X}$ (régime isotherme du cycle compression-détente de la structure hétérogène lyophobe). Au-delà de la vitesse critique $\dot{X}$, la force F croît avec la vitesse $\dot{X}$ : ceci peut s'expliquer par le déficit du flux calorifique venant de l'extérieur vers la chambre de compression par raport au flux calorifique nécessaire à la formation isotherme de l'interface matrice/liquide qui est normalement endothermique. Dans le cas où $\dot{X} > \dot{X}_c$, le processus se rapproche d'un processus quasi-adiabatique, ce qui provoque l'abaissement de la température du système hétérogène et l'augmentation de la tension superficielle (et donc de la pression capillaire de Laplace). La pression de Laplace détermine en effet la force F qui augmente aussi sur le diagramme de la figure 13.

Le diagramme de la figure 14 (force F en fonction du déplacement absolu $\Delta X$), à rapprocher de celui de la figure 12, est une construction points par points à différentes vitesses de déplacement Ẋ (de 5 à 200 mm/s), les points restant sur la même courbe quelle que soit la vitesse (si celle-ci est inférieure à la vitesse critique précitée).

Le diagramme de la figure 15 (force F en fonction de la vitesse de déplacement Ẋ) montre des valeurs mesurées pour différentes fréquences (1Hz, 3Hz, 6Hz, 9Hz et 12Hz) : on constate que la force F est indépendante de la fréquence en-dessous de la vitesse critique $\dot{X}_c$.

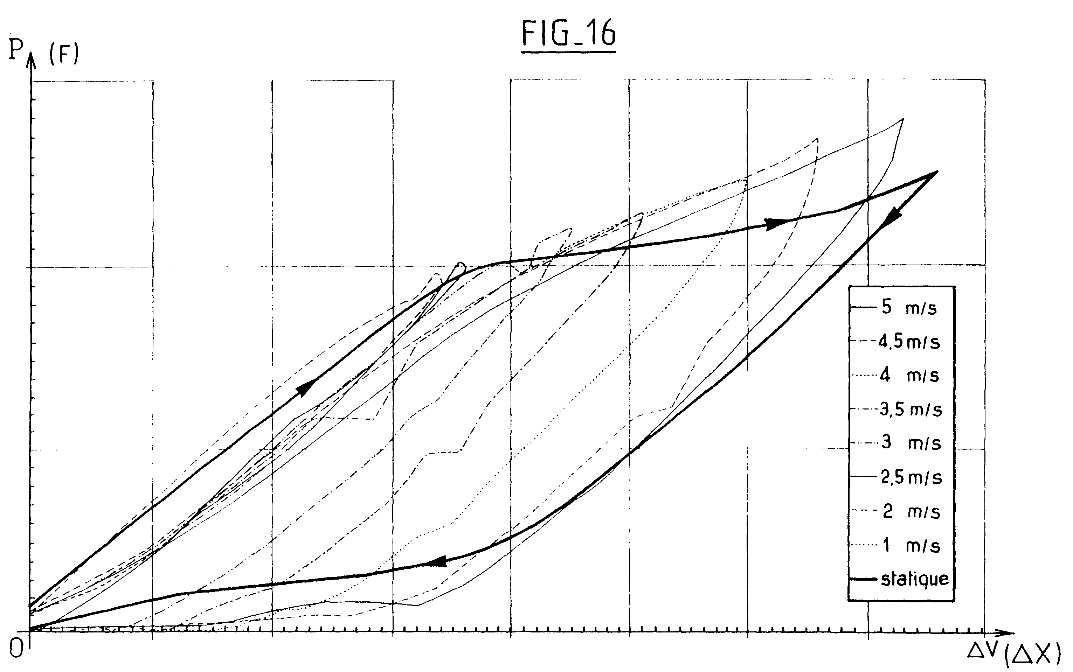

Le diagramme de la figure 16 (pression P en fonction de la variation de volume $\Delta V$ ou encore force F en fonction du déplacement $\Delta X$) illustre plusieurs caractéristiques mesurées à différentes vitesses de la tige de l'amortisseur, y compris la vitesse nulle (0 m/s ou statique, 1 m/s, 2 m/s, 2,5 m/s, 3 m/s, 3,5 m/s, 4 m/s, 4,5 m/s et 5 m/s). On constate que la pression P (ou la force F) est pratiquement indépendante de la vitesse (les vitesses considérées sont inférieures à la vitesse critique), de sorte que la caractéristique en dynamique reste en fait pratiquement calée sur la caractéristique statique. On constate que la variation de la pression ne varie que de quelques pourcents, alors que la variation de la vitesse de 0 à 5 m/s est proportionnellement considérable.

Il est clair que les caractéristiques de l'amortisseur selon l'invention illustrées sur les diagrammes précités n'ont rien à voir avec celles des amortisseurs traditionnels.

On va maintenant décrire succinctement d'autres variantes structurelles de l'amortisseur qui vient d'être décrit, en référence aux figures 17 à 23.

Sur la figure 17, on a utilisé pour les organes homologues les mêmes références que précédemment augmentées de 100.

La solution constructive de la figure 17 se démarque de celle de la figure 2 par le fait que chaque enveloppe étanche souple 150, 160 est en suspension libre dans la chambre intérieure associée 120, 121 de la tige-piston 112, et surtout par le fait que la chambre commune de compensation 130 à paroi souple 131 (soufflet en métal ou en matière plastique contenant de l'air) est agencée à l'intérieur du piston 113 qui est prévu creux. Les chambres de compression 118, 119 communiquent avec l'espace environnant des enveloppes 150, 160 par des fenétres 114.3, 115.3. La communication hydraulique et l'équi-pression à l'état statique sont assurées de chaque côté du piston par des clapets mobiles 132, 133 rappelés par un ressort à palette 132', 133', chaque clapet présentant en outre un passage central 138, 139 formant orifice calibré constant (non réglable dans ce cas). Comme les parties 114, 115 de la tige creuse ont des diamètres différents, on a une force de rebond supérieure à la force de choc (noté $F_r > F_{ch}$).

Sur la figure 18, les références sont encore augmentées de 100. La différence par rapport à la variante de la figure 17 réside dans la communication avec la chambre de compensation 230 : on utilise un tube central 232', dont les extrémités sont obturables par des clapets flottants 232, 233 à passage central calibré 238, 239, et qui débouche par des orifices médians 232" dans la chambre 230. L'enveloppe flexible 231 qui est dans la chambre de compensation 230 contient comme précédemment de l'air, mais elle est alors agencée sous la forme d'un soufflet toroidal entourant le tube central 232'. On a comme précédemment la relation $F_r > F_{ch}$.

La solution de la figure 18 est plus avantageuse que celle de la figure 17 dans le cas où l'on dispose d'un très faible espace annulaire pour agencer les clapets anti-retour 132, 133 (figure 17) à l'extérieur des portions 114.

Finalement, on est ainsi parvenu à réaliser un amortisseur présentant un très grand degré de dissipation d'énergie, c'est-à-dire de l'ordre de 90 à 95 , alors que les amortisseurs classiques ne parviennent qu'à des valeurs en général comprises entre 30 et 40 % dans le meilleur des cas.

En outre, on a vu que la force appliquée à la tige-piston de l'amortisseur peut rester indépendante de la vitesse de son déplacement dans certaines gammes de vitesses. Cette propriété, jamais encore obtenue avec les amortisseurs traditionnels, peut procurer un confort optimal pour les passagers d'un véhicule. A l'aide des étrangleurs, on peut assurer la linéarité de la liaison entre la force et la vitesse dans le domaine des faibles vitesses. La procédure de l'ajustage des étrangleurs pour gagner la zone concernée des vitesses consiste à faire varier la section de passage du fluide hydraulique de telle façon que la valeur maximale de la résistance hydraulique de l'étrangleur soit égale à la pression capillaire qui assure l'intrusion du liquide dans l'espace poreux des matrices de la structure hétérogène qui est placée dans les enveloppes flexibles. Dans le domaine des vitesses allant au-delà d'un seuil critique, la force devient dépendante de la vitesse de déplacement. Les systèmes hétérogènes jouent alors un rôle de filtre pour les perturbations extérieures, ce qui assure un confort excellent pour les passagers du véhicule, et diminue également les sollicitations sur l'ensemble dudit véhicule.

On parvient en outre à obtenir un amortisseur qui est 30 à 40 % plus léger que les amortisseurs classiques, et 30 à 40 % moins volumineux (1500 cm pour le volume de fluide homogène (huile) dans les chambres de travail d'un amortisseur traditionnel, à comparer avec 12 à 15 cm pour le volume de fluide hétérogène dans un amortisseur selon l'invention).

Enfin, l'amortisseur selon l'invention permet d'envisager un fonctionnement dans une bande de fréquence allant jusqu'à 30 hertz et au-delà, alors qu'un amortisseur classique ne va guère au-delà de 6 hertz.

Les domaines d'application de l'invention sont très nombreux, et on peut citer à titre d'exemples non limitatifs les véhicules automobiles, les véhicules ferroviaires, les heurtoirs ferroviaires, les trains d'atterrissage d'aéronefs, les supports de moteurs, les protections anti-vibrations diverses (y compris pour les ondes acoustiques), les systèmes parasismiques et les accouplements de modules cosmiques.

## Revendications

1. Amortisseur à haut pouvoir dissipatif, du type comportant un ensemble tige-piston (2, 3) coulissant dans un cylindre (4) en délimitant de part et d'autre du piston (3) une chambre de travail (5.1 ; 5.2) contenant du fluide hydraulique, ledit ensemble tige-piston étant adapté pour être relié à une source de perturbations extérieures (SP) et ledit cylindre à une structure à protéger (S), **caractérisé en ce que** :

   - chaque chambre de travail (5.1 ; 5.2) communique en permanence avec une chambre associée (6.1 ; 6.2) contenant une structure hétérogène d'absorption-dissipation d'énergie constituée par au moins une matrice capillairo-poreuse (9) et un liquide associé (9') au regard duquel ladite matrice est lyophobe ;
   - chaque chambre de travail (5.1 ; 5.2) communique en outre avec une chambre commune (7) par l'intermédiaire d'un système de valve associé (8.1 ; 8.2), ledit système incluant un moyen anti-retour (8.11 ; 8.21) assurant automatiquement la fermeture de la chambre de travail concernée lors de la compression, et l'ouverture de ladite chambre lors de la détente, ladite chambre commune (7) constituant une chambre de compensation assurant la continuité du fluide hydraulique lors des déplacements de l'ensemble tige-piston (2, 3) dans le cylindre (4).

2. Amortisseur selon la revendication 1, **caractérisé en ce que** le fluide hydraulique occupant les chambres de travail (5.1 ; 5.2) est identique au liquide des structures hétérogènes (9, 9') d'absorption-dissipation d'énergie.

3. Amortisseur selon la revendication 1, **caractérisé en ce que** chaque structure hétérogène (9, 9') d'absorption-dissipation d'énergie est confinée dans un logement étanche déformable, le fluide hydraulique occupant les chambres de travail (5.1 ; 5.2) étant alors un fluide technologique traditionnel.

4. Amortisseur selon l'une des revendications 1 à 3, **caractérisé en ce que** l'ensemble tige-piston (12 ; 112 ; 212) comporte une tige qui est creuse de part et d'autre du piston, chaque partie creuse délimitant intérieurement une chambre contenant une structure hétérogène d'absorption-dissipation d'énergie renfermée dans une enveloppe étanche souple.

5. Amortisseur selon l'une des revendications 1 à 3, **caractérisé en ce que** l'ensemble tige-piston comporte une tige qui est pleine de part et d'autre du piston, et ledit amortisseur comporte des chambres contenant une structure hétérogène d'absorption-dissipation d'énergie renfermée dans une enveloppe étanche souple, qui sont alors agencées autour du cylindre, à l'intérieur d'un boîtier commun.

6. Amortisseur selon la revendication 4 ou la revendication 5, **caractérisé en ce que** la tige-piston (12) est constituée de deux parties (14, 15) de même diamètre extérieur.

7. Amortisseur selon la revendication 4 ou la revendication 5, **caractérisé en ce que** la tige-piston (112 ; 212) est constituée de deux parties de diamètres extérieurs différents, la partie de plus grand diamètre étant du côté de la structure à protéger, et la partie de plus petit diamètre étant du côté de la source de perturbations extérieures.

8. Amortisseur selon la revendication 4, **caractérisé en ce que** chaque enveloppe étanche souple (50 ; 60) est accrochée au fond (14.2 ; 15.2) de la chambre intérieure associée (20 ; 21) de la tige-piston (12).

9. Amortisseur selon la revendication 5, **caractérisé en ce que** chaque enveloppe étanche souple est accrochée à la paroi interne du boîtier commun.

10. Amortisseur selon la revendication 5, **caractérisé en ce que** chaque enveloppe étanche souple est en suspension libre dans un boîtier latéral associé rigidement solidaire du boîtier central et en communication avec celui-ci par une fenêtre associée.

11. Amortisseur selon la revendication 4 ou la revendication 5, **caractérisé en ce que** chaque enveloppe étanche souple (150, 160 ; 250, 260) est en suspension libre dans la chambre intérieure associée de la tige-piston.

12. Amortisseur selon l'une des revendications 1 à 11, **caractérisé en ce que** les matrices capillaire-poreuses (51, 61 ; 151, 161 ; 251, 261) sont identiques topologiquement et géométriquement de part et d'autre du piston, chaque matrice étant uni-ou pluriporeuse en fonction de la dureté désirée de l'amortisseur.

13. Amortisseur selon l'une des revendications 1 à 11, **caractérisé en ce que** les matrices capillairo-poreuses (51, 61 ; 151, 161 ; 251, 261) sont différentes topologiquement et géométriquement de part et d'autre du piston, chaque matrice étant uni-ou pluriporeuse en fonction de la dureté désirée de l'amortisseur.

14. Amortisseur selon l'une quelconque des revendications 1 à 13, **caractérisé en ce que** les liquides non mouillants (52, 62 ; 152, 162 ; 252, 262) ont des caractéristiques identiques de tension superficielle de part et d'autre du piston.

15. Amortisseur selon l'une quelconque des revendications 1 à 13, **caractérisé en ce que** les liquides non mouillants (52, 62 ; 152, 162 ; 252, 262) ont des caractéristiques différentes de tension superficielle de part et d'autre du piston.

16. Amortisseur selon l'une des revendications 1 à 15, **caractérisé en ce que** la chambre commune de compensation (30 ; 130 ; 230) est à paroi souple de façon à présenter un volume variable.

17. Amortisseur selon les revendications 4 et 16, **caractérisé en ce que** la paroi souple (31) entoure une partie centrale du cylindre (11), de façon à délimiter une chambre annulaire constituant la chambre de compensation (30).

18. Amortisseur selon les revendications 4 et 16, **caractérisé en ce que** la chambre commune de compensation (130 ; 230) à paroi souple est agencée à l'intérieur du piston qui est prévu creux.

19. Amortisseur selon les revendications 4 et 16, **caractérisé en ce que** la chambre commune de compensation à paroi souple est une chambre annulaire agencée en bout du boîtier commun.

20. Amortisseur selon l'une des revendications 1 à 15, **caractérisé en ce que** la chambre commune de compensation (7) est à paroi rigide, et présente un fond (7', 7", 7''') mobile ou déformable associé à un organe élastique.

21. Amortisseur selon l'une des revendications 1 à 20, **caractérisé en ce que** le système de valve (32 ; 33) associé à chaque chambre de travail inclut un étrangleur (34 ; 36) déterminant un orifice calibré (38 ; 39) pour le passage du fluide hydraulique venant de la chambre commune de compensation (30).

22. Amortisseur selon la revendication 21, **caractérisé en ce que** chaque étrangleur (34 ; 36) est réglable individuellement, et peut en particulier être calé à une position telle que la valeur maximale de la résistance hydraulique dudit étrangleur corresponde à la valeur de la pression capillaire d'intrusion du liquide (52; 62) dans les pores de la matrice associée (51 ; 61).

23. Amortisseur selon les revendications 1 et 17, **caractérisé en ce que** le moyen anti-retour du système de valve (32 ; 33) associé à chaque chambre de travail comporte un collier plat déformable (40 ; 41), dont les deux branches peuvent obturer des orifices radiaux (24 ; 25) du cylindre (11) qui communiquent par des canaux respectifs (22 ; 23) avec la chambre commune de compensation (30).

24. Amortisseur selon la revendication 1, et la revendication 18 ou la revendication 19, **caractérisé en ce que** le moyen anti-retour du système de valve (132, 133 ; 232, 233) associé à chaque chambre de travail comporte des clapets mobiles éventuellement chargés par un ressort associé.

25. Amortisseur selon la revendication 24, **caractérisé en ce que** les clapets mobiles (232, 233) sont agencés aux extrémités d'un tube central (232') débouchant dans le piston creux (213) par des orifices associés (232"), la chambre de compensation (230) contenant un soufflet toroidal d'air entourant ledit tube.

26. Amortisseur selon la revendication 24 ou la revendication 25, **caractérisé en ce que** les clapets mobiles (132, 133 ; 232, 233) présentent un passage central (138, 139 ; 238, 239) formant orifice calibré.

**Patentansprüche**

1. Stoßdämpfer mit hoher Verlustleistung und der Art, die eine Anordnung aus Stange/Kolben (2, 3) umfaßt, die sich in einem Zylinder (4) verschiebt und dabei auf beiden Seiten des Kolbens (3) eine Arbeitskammer (5.1; 5.2) begrenzt, die ein Hydraulikfluid enthält, wobei die Anordnung aus Stange/Kolben dazu geeignet ist, mit einer Quelle (SP) äußerer Störungen verbunden zu werden, und der Zylinder dazu geeignet ist, mit einer zu schützenden Struktur (S) verbunden zu werden, **dadurch gekennzeichnet, daß**:

   - jede Arbeitskammer (5.1; 5.2) ständig mit einer dazugehörigen Kammer (6.1; 6.2) in Verbindung steht, die eine heterogene Struktur zur Energieabsorption/Energiedissipation enthält, die aus mindestens einer kapillarporösen Matrix (9) und einer dazugehörigen Flüssigkeit (9') gebildet ist, gegenüber der die genannte Matrix lyophob ist,

   - jede Arbeitskammer (5.1; 5.2) ferner über ein dazugehöriges Ventilsystem (8.1; 8.2) mit einer gemeinsamen Kammer (7) in Verbindung steht, wobei das System Rückschlagmittel (8.11; 8.21) einschließt, die automatisch das Schließen der betroffenen Arbeitskammer während der Kompression und das Öffnen der genannten Kammer während der Entspannung sicherstellen, wobei die gemeinsame Kammer (7) eine Ausgleichskammer bildet, welche den Fluß des Hydraulikfluids während der Verschiebungen der Anordnung aus Stange/Kolben (2, 3) in dem Zylinder (4) sicherstellt.

2. Stoßdämpfer nach Anspruch 1, **dadurch gekennzeichnet, daß** das Hydraulikfluid, das die Arbeitskammern (5.1; 5.2) ausfüllt, identisch zur Flüssigkeit der heterogenen Strukturen (9, 9') zur Energieabsorption/Energiedissipation ist.

3. Stoßdämpfer nach Anspruch 1, **dadurch gekennzeichnet, daß** jede heterogene Struktur (9, 9') zur Energieabsorption/Energiedissipation in einer verformbaren, dichten Aufnahme eingeschlossen ist, wobei das die Arbeitskammern (5.1; 5.2) ausfüllende Hydraulikfluid dann ein herkömmliches technologisches Fluid ist.

4. Stoßdämpfer nach einem der Ansprüche 1 bis 3, **dadurch gekennzeichnet, daß** die Anordnung aus Stange/Kolben (12; 112; 212) eine Stange umfaßt, die auf beiden Seiten des Kolbens hohl ist, wobei jeder hohle Teil innen eine Kammer begrenzt, die eine heterogene Struktur zur Energieabsorption/Energiedissipation enthält, die in einer flexiblen, dichten Umhüllung eingeschlossen ist.

5. Stoßdämpfer nach einem der Ansprüche 1 bis 3, **dadurch gekennzeichnet, daß** die Anordnung aus Stange/Kolben eine Stange umfaßt, die auf beiden Seiten des Kolbens massiv ist, und der Stoßdämpfer Kammern umfaßt, die eine heterogene Struktur zur Energieabsorption/Energiedissipation enthalten, die in einer flexiblen, dichten Umhüllung eingeschlossen ist, die dann im Inneren eines gemeinsamen Gehäuses um den Zylinder herum angeordnet sind.

6. Stoßdämpfer nach Anspruch 4 oder Anspruch 5, **dadurch gekennzeichnet, daß** die Anordnung aus Stange/Kolben (12) aus zwei Teilen (14, 15) mit gleichem Außendurchmesser gebildet ist.

7. Stoßdämpfer nach Anspruch 4 oder Anspruch 5, **dadurch gekennzeichnet, daß** die Anordnung aus Stange/Kolben (112; 212) aus zwei Teilen mit unterschiedlichem Außendurchmesser gebildet ist, wobei sich das Teil mit größerem Durchmesser auf der Seite der zu schützenden Struktur und das Teil mit kleinerem Durchmesser auf der Seite der Quelle der äußeren Störungen befindet.

8. Stoßdämpfer nach Anspruch 4, **dadurch gekennzeichnet, daß** jede flexible, dichte Umhüllung (50; 60) am Boden (14.2; 15.2) der dazugehörigen Innenkammer (20; 21) der Anordnung aus Stange/Kolben (12) befestigt ist.

9. Stoßdämpfer nach Anspruch 5, **dadurch gekennzeichnet, daß** jede flexible, dichte Umhüllung an der Innenwand des gemeinsamen Gehäuses befestigt ist.

10. Stoßdämpfer nach Anspruch 5, **dadurch gekennzeichnet, daß** jede flexible, dichte Umhüllung in einem dazugehörigen seitlichen Gehäuse frei aufgehängt ist, das auf starre Weise fest mit dem zentralen Gehäuse verbunden ist und mit diesem über ein dazugehöriges Fenster in Verbindung steht.

11. Stoßdämpfer nach Anspruch 4 oder Anspruch 5, **dadurch gekennzeichnet, daß** jede flexible, dichte Umhüllung (150, 160; 250, 260) in einer dazugehörigen Innenkammer der Anordnung aus Stange/Kolben frei aufgehängt ist.

12. Stoßdämpfer nach einem der Ansprüche 1 bis 11, **dadurch gekennzeichnet, daß** die kapillarporösen Matrizen (51, 61; 151, 161; 251, 261) auf beiden Seiten des Kolbens topologisch und geometrisch identisch sind, wobei jede Matrix je nach gewünschter Härte des Stoßdämpfers uni- oder multiporös ist.

13. Stoßdämpfer nach einem der Ansprüche 1 bis 11, **dadurch gekennzeichnet, daß** die kapillarporösen Matrizen (51, 61; 151, 161; 251, 261) auf beiden Seiten des Kolbens topologisch und geometrisch unterschiedlich sind, wobei jede Matrix je nach gewünschter Härte des Stoßdämpfers uni- oder multiporös ist.

14. Stoßdämpfer nach einem der Ansprüche 1 bis 13, **dadurch gekennzeichnet, daß** die nicht benetzenden Flüssigkeiten (52, 62; 152, 162; 252, 262) auf beiden Seiten des Kolbens die gleichen Oberflächenspannungseigenschaften haben.

15. Stoßdämpfer nach einem der Ansprüche 1 bis 13, **dadurch gekennzeichnet, daß** die nicht benetzenden Flüssigkeiten (52, 62; 152, 162; 252, 262) auf beiden Seiten des Kolbens unterschiedliche Oberflächenspannungseigenschaften haben.

16. Stoßdämpfer nach einem der Ansprüche 1 bis 15, **dadurch gekennzeichnet, daß** die gemeinsame Ausgleichskammer (30; 130; 230) eine flexible Wand hat, derart, daß sie ein veränderliches Volumen aufweist.

17. Stoßdämpfer nach den Ansprüchen 4 und 16, **da-**

**durch gekennzeichnet, daß** die flexible Wand (31) einen zentralen Teil des Zylinders (11) umgibt, derart, daß eine ringförmige Kammer begrenzt wird, welche die Ausgleichskammer (30) bildet.

18. Stoßdämpfer nach den Ansprüchen 4 und 16, **dadurch gekennzeichnet, daß** die gemeinsame Ausgleichskammer (130; 230) mit flexibler Wand im Inneren des hohl vorgesehenen Kolbens angeordnet ist.

19. Stoßdämpfer nach den Ansprüchen 4 und 16, **dadurch gekennzeichnet, daß** die gemeinsame Ausgleichskammer mit flexibler Wand eine ringförmige Kammer ist, die am Ende des gemeinsamen Gehäuses angeordnet ist.

20. Stoßdämpfer nach einem der Ansprüche 1 bis 15, **dadurch gekennzeichnet, daß** die gemeinsame Ausgleichskammer (7) eine starre Wand hat und einen beweglichen oder verformbaren Boden (7', 7", 7''') aufweist, der mit einem elastischen Element verbunden ist.

21. Stoßdämpfer nach einem der Ansprüche 1 bis 20, **dadurch gekennzeichnet, daß** das Ventilsystem (32; 33), das jeder Arbeitskammer zugeordnet ist, ein Drosselorgan (34; 36) einschließt, das eine kalibrierte Öffnung (38; 39) für den Durchtritt des Hydraulikfluids festsetzt, das aus der gemeinsamen Ausgleichskammer (30) kommt.

22. Stoßdämpfer nach Anspruch 21, **dadurch gekennzeichnet, daß** jedes Drosselorgan (34; 36) individuell einstellbar ist, und insbesondere in einer solchen Stellung festgestellt werden kann, daß der maximale Wert des hydraulischen Widerstandes des Drosselorgans dem Wert des kapillaren Eindringdruckes der Flüssigkeit (52; 62) in die Poren der dazugehörigen Matrix (51; 61) entspricht.

23. Stoßdämpfer nach den Ansprüchen 1 und 17, **dadurch gekennzeichnet, daß** die Rückschlagmittel des jeder Arbeitskammer zugeordneten Ventilsystems (32; 33) einen flachen, verformbaren Reif (40; 41) umfassen, dessen zwei Schenkel radiale Öffnungen (24; 25) des Zylinders (11) verschließen können, die über entsprechende Kanäle (22; 23) mit der gemeinsamen Ausgleichskammer (30) in Verbindung stehen.

24. Stoßdämpfer nach Anspruch 1, und Anspruch 18 oder Anspruch 19, **dadurch gekennzeichnet, daß** die Rückschlagmittel des jeder Arbeitskammer zugeordneten Ventilsystems (132, 133; 232, 233) bewegliche Ventilkörper umfassen, die gegebenenfalls durch eine dazugehörige Feder belastet sind.

25. Stoßdämpfer nach Anspruch 24, **dadurch gekennzeichnet, daß** die beweglichen Ventilkörper (232, 233) an den Enden eines zentralen Rohres (232') angeordnet sind, das über dazugehörige Öffnungen (232") in den hohlen Kolben (213) mündet, wobei die Ausgleichskammer (230) einen ringförmigen Luftbalg enthält, der das Rohr umgibt.

26. Stoßdämpfer nach Anspruch 24 oder Anspruch 25, **dadurch gekennzeichnet, daß** die beweglichen Ventilkörper (132, 133; 232, 233) einen zentralen Durchgang (138, 139; 238, 239) aufweisen, der die kalibrierte Öffnung bildet.

**Claims**

1. A shock absorber having high dissipating power, of the type comprising a rod-and-piston assembly (2, 3) slidably received in a cylinder (4) and defining on either side of a piston (3) respective working chambers (5.1; 5.2) containing a hydraulic fluid, said rod-and-piston assembly being adapted to be connected to an external source of disturbance (SP) and said cylinder being connected to a structure to be protected (S), the shock absorber being **characterized in that**:

   · each working chamber (5.1; 5.2) communicates continuously with an associated chamber (6.1; 6.2) containing a heterogeneous energy absorption-dissipation structure constituted by at least one capillo-porous matrix (9) and an associated liquid (9') relative to which said matrix is lyophobic; and
   · each working chamber (5.1; 5.2) also communicates with a common chamber (7) via an associated valve system (8.1; 8.2), said system including non-return means (8.11; 8.21) causing the working chamber concerned to close automatically during compression, and causing said chamber to open during expansion, said common chamber (7) constituting a compensation chamber ensuring continuity of the hydraulic fluid during displacements of the rod-and-piston assembly (2, 3) in the cylinder (4).

2. A shock absorber according to claim 1, **characterized in that** the hydraulic fluid occupying the working chambers (5.1; 5.2) is identical to the liquid of the heterogeneous energy absorption-dissipation structures (9, 9').

3. A shock absorber according to claim 1, **characterized in that** each heterogeneous energy absorption-dissipation structure (9, 9') is confined in a deformable leakproof housing, the hydraulic fluid occupying the working chambers (5.1; 5.2) then being a conventional engineering fluid.

4.  A shock absorber according to any one of claims 1 to 3, **characterized in that** the rod-and-piston assembly (12; 112; 212) comprises a rod which is hollow on either side of the piston, each hollow portion defining internally a chamber containing a heterogeneous energy absorption-dissipation structure enclosed in a flexible leakproof envelope.

5.  A shock absorber according to any one of claims 1 to 3, **characterized in that** the rod-and-piston assembly comprises a rod which is solid on either side of the piston, and said shock absorber has chambers containing respective heterogeneous energy absorption-dissipation structures enclosed in flexible leakproof envelopes, which chambers are then placed around the cylinder, inside a common housing.

6.  A shock absorber according to claim 4 or claim 5, **characterized in that** the rod-and-piston assembly (12) is constituted by two portions (14, 15) having the same outside diameter.

7.  A shock absorber according to claim 4 or claim 5, **characterized in that** the rod-and-piston assembly (112; 212) is constituted by two portions having different outside diameters, the portion with the larger diameter being adjacent to the structure to be protected, and the portion with the smaller diameter being adjacent to the external source of disturbance.

8.  A shock absorber according to claim 4, **characterized in that** each flexible leakproof envelope (50; 60) is secured to an end wall (14.2; 15.2) of the associated internal chamber (20; 21) of the rod-and-piston assembly (12).

9.  A shock absorber according to claim 5, **characterized in that** each flexible leakproof envelope is secured to the inside wall of the common housing.

10. A shock absorber according to claim 5, **characterized in that** each flexible leakproof envelope is freely suspended inside an associated lateral housing rigidly secured to the central housing and in communication therewith via an associated window.

11. A shock absorber according to claim 4 or claim 5, **characterized in that** each flexible leakproof envelope (150, 160; 250, 260) is freely suspended in the associated internal chamber of the rod-and-piston assembly.

12. A shock absorber according to any one of claims 1 to 11, **characterized in that** the capillo-porous matrices (51, 61; 151, 161; 251, 261) are topologically and geometrically identical on either side of the piston, each matrix being singly-porous or multiply-porous as a function of the stiffness desired of the shock absorber.

13. A shock absorber according to any one of claims 1 to 11, **characterized in that** the capillo-porous matrices (51, 61; 151, 161; 251, 261) are topologically and geometrically different on opposite sides of the piston, each matrix being singly-porous or multiply-porous as a function of the stiffness desired for the shock absorber.

14. A shock absorber according to any one of claims 1 to 13, **characterized in that** the lyophobic liquids (52, 62; 152, 162; 252, 262) have identical surface tension characteristics on either side of the piston.

15. A shock absorber according to any one of claims 1 to 13, **characterized in that** the lyophobic liquids (52, 62; 152, 162; 252, 262) have different surface tension characteristics on either side of the piston.

16. A shock absorber according to any one of claims 1 to 15, **characterized in that** the common compensation chamber (30; 130; 230) has a flexible wall so as to present a volume that is variable.

17. A shock absorber according to claims 4 and 16, **characterized in that** the flexible wall (31) surrounds a central portion of the cylinder (11) so as to define an annular chamber constituting the compensation chamber (30).

18. A shock absorber according to claims 4 and 16, **characterized in that** the common compensation chamber (130; 230) having a flexible wall is arranged inside the piston which is designed to be hollow.

19. A shock absorber according to claims 4 and 16, **characterized in that** the common compensation chamber having a flexible wall is an annular chamber arranged at the end of the common housing.

20. A shock absorber according to any one of claims 1 to 15, **characterized in that** the common compensation chamber (7) has a rigid wall, and presents an end wall (7', 7", 7''') that is movable or deformable and that is associated with a resilient member.

21. A shock absorber according to any one of claims 1 to 20, **characterized in that** the valve system (32; 33) associated with each working chamber includes a throttle (34; 36) defining a calibrated orifice (38; 39) for passing hydraulic fluid coming from the common compensation chamber (30).

**22.** A shock absorber according to claim 21, **characterized in that** each throttle (34; 36) is individually adjustable, and in particular can be set to a position such that the maximum value of the hydraulic resistance of said throttle corresponds to the value of the capillary pressure at which the fluid (52; 62) intrudes into the pores of the associated matrix (51; 61).

**23.** A shock absorber according to claims 1 and 17, **characterized in that** the non-return means of the valve system (32; 33) associated with each working chamber comprises a deformable flat collar (40; 41) with two branches capable of closing radial orifices (24; 25) of the cylinder (11) which communicate via respective channels (22; 23) with the common compensation chamber (30).

**24.** A shock absorber according to claim 1, and claim 18 or claim 19, **characterized in that** the non-return means of the valve system (132, 133; 232, 233) associated with each working chamber comprises moving valve members optionally biased by associated springs.

**25.** A shock absorber according to claim 24, **characterized in that** the moving valve members (232, 233) are arranged at the ends of a central tube (232') opening out into the hollow piston (213) via associated orifices (232"), the compensation chamber (230) containing a toroidal bellows containing air and surrounding said tube.

**26.** A shock absorber according to claim 24 or claim 25, **characterized in that** the moving valve members (132, 133; 232, 233) present respective central passages (138, 139; 238, 239) forming calibrated orifices.

# FIG_1

FIG_2

FIG_3

FIG_4

FIG_5

FIG_6

FIG_7

FIG_8

FIG_8a

FIG_8b

EP 1 250 539 B1

FIG_9

FIG_9a

FIG_10

FIG_11

FIG_12

21

FIG.13

isotherme → quasi-adiabatique

$\dot{X}c$

$\dot{X}$

FIG.14

$\upsilon = 5 \ à \ 200 \, mm/s$

$\Delta X$

FIG.15

$-\dot{X}c$

$\dot{X}c$

$\dot{X}$

- • 1Hz
- ■ 3Hz
- △ 6Hz
- × 9Hz
- ⊗ 12Hz

FIG_16

## FIG_17

$F_{rebond}$

$F_{choc}$

$F_r > F_{ch}$

## FIG_18

$F_r$

$F_{ch}$